# EUROPEAN PATENT APPLICATION

(11) **EP 0 648 426 A1**
(43) Date of publication of application: **19.04.1995**
(21) Application number: 94202886.1
(22) Date of filing: 05.10.1994
(51) Int. Cl.: A23D 9/00, A23G 1/00, A23G 3/00

(54) **Bloom-inhibiting fat blends**

(30) Priority: 13.10.1993 EP 93202874
(71) Applicant: LODERS CROKLAAN B.V., NL-1521 AX Wormerveer (NL)
(72) Inventor: Cain, Frederick William, NL-2271 VL Voorburg (NL); Schmidl, Bettina, NL-1829 DB Alkmaar (NL); Hughes, Adrian David, NL-2513 BR Den Haag (NL)
(74) Representative: Rots, Maria Johanna Francisca

(57) **Abstract**

The invention concerns triglyceride compositions that display excellent anti-bloom performance, when applied in chocolate. The blends comprise triglycerides A, B and C, wherein A is of the (H₂M + M₂H)-type (H= saturated fatty acid C₁₆⁺; M= saturated fatty acid C₈-C₁₄);
B is a triglyceride composition with less than 30 wt% (U₃ + U₂S), U= unsaturated fatty acid C₁₈⁺; S= saturated fatty acid C₁₆-C₂₂;
B contains more than 40 wt% saturated or unsaturated fatty acid residues with a melting point below 60°C, while N₂₀ (not stabilised) of B < 40;
C is a triglyceride composition with an SUS content of ≧ 30 wt% and/or having an N₂₀ (not stabilised) > 15.

## Description

As set out in our co-pending European Patent Application 91 30 60 26.5 (filed July 3, 1991), chocolate compositions containing the conventional ingredients, such as cocoa powder, cocoa butter, cocoa-butter equivalents, sugar and emulsifiers, need to be tempered because of the presence of polymorphic fats, such as POP, POSt and/or StOSt (P = palmitic acid; St = stearic acid and O = oleic acid).

According to the above-mentioned patent application an improvement in bloom formation is obtained by adding a minimum amount of a hardstock fat to the chocolate composition. The hardstock fats used are of the (H₂M + M₂H)-type, wherein H = saturated fatty acid having at least 16 C-atoms and M = saturated fatty acid having C₈-C₁₄ atoms, preferably C₁₂-C₁₄ atoms. Very useful are hardstock fats obtainable by interesterification of mixtures of vegetable oils high in triglycerides with fatty acid residues having at least 16 C-atoms, and triglycerides rich in lauric and/or myristic acid residues, e.g. as disclosed in our Australian Patent Application 12346/85 (Serial Number 549,465).

Although the results obtained according to the above-mentioned European Patent Application are, in general, very satisfactory, in particular upon storage above ambient temperature, we found that bloom formation still occurred upon storage at ambient temperature when these hardstock fats were applied at relatively high levels, i.e. above 1.5 wt.% on product, in particular in dark chocolate compositions. It has, however, been found that the prevention of bloom at high temperatures is most effective when more of the additive is applied.

In the past, we also conducted a study in order to find out whether we could improve the above results. As a result, we found a blend of triglycerides which upon application in chocolate compositions, or in chocolate-like compositions, wherein high amounts of cocoa butter equivalents are present, or in baked bakery products, provided with a chocolate layer or a chocolate-like layer, or in chocolate encapsulated filling led to an improvement of the anti-bloom behaviour of the chocolate compositions. This result is the subject of our WO 93/01274, according to this document triglyceride compositions, comprising triglycerides from the types A and B and/or C, wherein A is a triglyceride composition of the (H₂M + M₂H)-type, as defined above; B is a soft triglyceride composition, having a relatively high level of (U₃ + U₂S)-triglycerides and C is a vegetable fat or a fraction thereof with an N₂₀ (not stab.) of more than 15 display the desired improvement. However, component B must have a level of (U₃ + U₂S) triglycerides of at least 30 wt%.

Now, we have found compositions, wherein component B no longer needs the minimum amount of (U₃ + U₂S) as required in WO 93/01274.

Therefore, the present invention concerns novel blends of triglycerides that comprise triglyceride compositions A, B and C in amounts of:
2-95 wt.%, preferably 5-80 wt.% of A;
0.5-94.5 wt.%, preferably 10-80 wt.% of B;
0-97.5 wt.%, preferably 5-70 wt.% of C,
wherein
A is a triglyceride composition of the (H₂M + M₂H)-type as defined above, preferably with a weight ratio of components having 40-46 C-atoms : components having 30-38 C-atoms 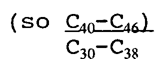
of 1-20, preferably 2-10;
B is a vegetable or synthetic triglyceride composition having a content of (U₃ + U₂S)-triglycerides of less than 30 wt.% and B having more than 40 wt% saturated and/or unsaturated fatty acid residues with a melting point for the free acid of less than 60°C, preferably less than 55°C, while the N₂₀ (not stabilised) of component B is less than 40, preferably less than 30, more preferably less than 20
C is a triglyceride composition having a SUS content of at least 30 wt.%, preferably at least 45 wt.%, and/or C is a triglyceride composition that displays an N₂₀ (not stabilised) of more than 15, U = cis- or trans-, mono- or polyunsaturated fatty acid having at least 18 C-atoms, in particular oleic acid, and S = saturated fatty acid having 16-22 C-atoms, in particular 16-18 C-atoms.
The above-mentioned blends can be used as such as the fat phase of chocolate compositions or as additive for the fat phase of such chocolate compositions, the prerequisite in both instances being that the fat phase of the chocolate composition should contain 1-25 wt.% of the above-mentioned blend of A, B and C, preferably 10-20 wt.%, while this fat phase should at the same time comprise at least 15 wt.% of a SUS component, either originating from the above-mentioned blend or added **per se** as cocoa butter or cocoa-butter equivalent.

The (H₂M + M₂H)-type composition A is preferably obtained from interesterification of vegetable oil high in triglycerides with fatty acid residues having at least 16 C-atoms (in particular hardened palm oil, such as PO-58) and triglycerides rich in lauric and/or myristic acid residues (in particular hardened palm kernel oil, such as PK-39). In case this is suitable the product is obtained as stearin fraction from a fractionation of the interesterification product.

Component B of the fat blend according to the invention is a vegetable or synthetic triglyceride composition having a content of (U₃ + U₂S) triglycerides of less than 30 wt.%, in particular 0-30 wt.% Simultaneously, this component B should contain more than 40 wt% saturated and/or unsaturated fatty acid residues with a melting point of less than 60°C. Examples of such fatty acids are acetic, propionic, buteric, caprylic, capric, lauric, myristic, oleic, linoleic, linolenic. Examples of triglyceride compositions B are palm kernel olein; MCT oils (= synthetic fully saturated liquid oils, based on C₈-C₁₄, mainly C₈ and C₁₀ saturated fatty acids), coconut olein, coconut oil, blends of these oils or blends of these oils with other liquid oils or with other fats.

Component C of the blend can be absent, in which case the blend only consists of components A and B. In that case, however, component C must be added to the chocolate composition itself since at least 15 wt.% of SUS must be present in the fat phase of the chocolate composition. Therefore, it is preferred that component C be present in the blend according to the invention. The maximum amount of C in the blend is 97.5 wt.%, we prefer, however, blends with 5-70 wt% of C, so that a blend can be provided wherein enough material of components A and B is present to obtain the required effect.
Suitable examples of triglyceride composition C are : cocoa butter or fractions thereof, shea stearin, palm oil mid-fractions or illipe. Also enzymically made cocoabutter equivalents can be used. It is preferred to use a component C that has a content of trisaturated triglycerides of less than 5 wt.%, in particular less than 3 wt.%.
Although those blends can be used in any type of chocolate compositions (so, including milk chocolate), we have found that the best effects are obtained by adding the blends to dark chocolate compositions. The invention further comprises chocolate bars and chocolate-coated confectionery products, in particular those made from dark chocolate, wherein the chocolate composition comprises an effective amount of the blends of A, B and C according to the invention.

Another aspect of the invention concerns the use of a blend of compositions A, B and C according to the above invention in chocolate compositions wherein this blend is used to improve the anti-bloom behaviour of a chocolate composition upon storage at ambient temperatures (i.e. temperatures up to 35°C), compared with a system that contains no (H₂M + M₂H)-type fat.
The triglyceride compositions according to the invention are also applicable in systems, wherein all or substantially all of the cocoa butter is replaced by a cocoa butter equivalent (so: in chocolate-like compositions).

In this case component C of this blend must be present in the blend in amounts of at least 60 wt.%, preferably at least 70 wt.%

The invention therefore also comprises bars and coated confectionery products wherein the chocolate-like composition comprises effective amounts of the blends of A, B and C according to the invention, effective amounts being 5-100 wt.% of the fat component of the composition.

We also found that problems related with the occurence of bloom formation in chocolate or chocolate-like coatings of baked bakery products could also be overcome by the application of compositions according to the invention. In those cases we found, however, that an additional problem had to be solved: while the problems, related with the bloom formation could be overcome by the use of mixtures of A and B, we found that the application of these mixtures did not always provide the highly functional doughs that we aimed for. We found that in those cases higly functional doughs could be obtained by incorporation of a fat component C with a minimum N₂₀-value (not stabilized) of 15. The application of such fat components C also provided, that we could apply fractions of the fat component A, such as the olein fraction thereof, so that more flexibility in our fat compositions was possible.

Baked bakery products, such as biscuits, cookies or cakes, are often provided with a chocolate layer (or a chocolate-like layer based on a cocoa butter equivalent). This layer can completely encapsulate the baked product or can be present as a coating, not completely encapsulating the baked product.

As the chocolate or chocolate-like layer is based on polymorphic fats high in SUS-type triglycerides (S = sat. C₁₆-C₁₈; U = mainly C_{18:1}), storage of the products often led to bloom formation of the chocolate(-like) layer.

In our Australian Patent Application 19,379/92 we already disclosed fat compositions that could be applied to prevent bloom in the chocolate(-like) layers of encapsulated fillings. A possible filling is a biscuit or a cookie, while Example VI of this Australian Patent Application illustrates the preparation of a biscuit which is enrobed by a chocolate composition containing 75 wt.% of palm oil olein and 25 wt.% of a fat having about 70 wt.% of (H₂M + M₂H).

We now found that our fat compositions can display an effect similar to that disclosed in the above-mentioned Australian Patent Application, even if the baked product is not encapsulated in a chocolate(-like) layer but is provided with a coating of chocolate(-like) material that does not completely encapsulate the baked product. Simultaneously these fat compositions lead to high functional doughs, wherein all kind of fats A containing (H₂M + M₂H)-triglycerides can be applied.

The (H₂M + M₂H) fat present in the fat phase of the dough from which the baked product is made migrates to the chocolate(-like) layer and acts there as an anti-bloom agent. It is, however, also possible to add the fat composition immediately to the chocolate composition from which the chocolate(-like) layer is made.

For the above purposes fat A suitably is selected from the group consisting of:
a) interesterified mixture of vegetable oil high in triglycerides with fatty acid residues having at least 16 C atoms and vegetable triglycerides rich in lauric and/or myristic acid residues;
b) stearin fractions of the fractionation of fats a) above;
c) mid-fractions of the fractionation of fats a) above;
d) olein fractions of the fractionation of fats a) above;
e) mixtures of fractions a, b, c and/or d above.
The interesterified mixture a) above preferably displays a weight ratio C₄₂ : C₃₆ (= triglyceride with 42, respectively, 36 C atoms) of 2.0-5.0. Examples of such interesterified mixtures are given in the above-mentioned Australian Patent Application 19,379/92.

It is, however, also possible to apply fractions of the above-mentioned mixtures. Very suitable fat compositions are obtained when the fat composition contains, as fat A, a stearin fraction displaying a 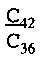
of more than 7.0.

However, also application of the mid-fraction with 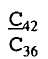
= 5.0-7.0 or of the olein fraction with C₄₂ : C₃₆ = less than 2.0 leads to very acceptable results.

The only perequisite for fat A is that its (H₂M + M₂H) content is 20-100 wt.%, preferably 40-85 wt.%.

In the fats A rich in (H₂M + M₂H) triglycerides, the triglyceride distribution is preferably such that (C₄₀-C₄₆) : (C₃₀-C₃₈) is between 1 and 20, preferably between 2 and 10.

Fat C suitable for such products, based on dough is either a hardened vegetable fat, a fraction thereof or a fraction of an unhardened vegetable fat, its N₂₀ (not stabilised), however, must be more than 15.

Very suitable fats C are hardened vegetable fats or fractions thereof having a melting point of 25-55°C, such as hardened palm oil olein-37, hardened palm oil-44, hardened soybean-36, a mid-fraction of a hardened mixture of soybean oil and cottonseed oil.

However, also fractions of unhardened vegetable oils, which fractions have a SUS content of more than 35 wt.%, preferably more than 60 wt.%, can be successfully applied.

A preferred fat C is palm oil stearin. The N₂₀ value (NMR-pulse non-stab., i.e. measured after the following T regime : melt at 80°C; keep at 60°C for 10 minutes, at 0°C for 1 hour and at 20°C for 30 minutes [= measurement temperatures]) of fat C is preferably more than 25, more preferably more than 40.

The N-line of the total fat composition (so consisting of the blend of fats A, B and/or C) in this case is preferably (not stabilized): N₂₀ = 15-55, more preferably 20-45, and N₃₀ = 2-30, more preferably 4-15.

The baked bakery products, at least partly coated with a chocolate or chocolate-like material, wherein the fat phase of the dough from which the baked product was made at least partly consists of the fat composition according to the invention are also part of the invention.

The (H₂M + M₂H) level of the fat phase of the dough phase of the baked product is preferably 10-40 wt.%.

In another embodiment of the invention we have found that problems, occurring on chocolate-encapsulated fillings can also be overcome by applying the compositions of our invention. In fact, we found, that a problem similar to the problem for the dough fats had to be overcome. I.e. to come to a fat composition that displays a high quality performance when applied in fillings and which enables the application of several types of fats A.

Chocolate-encapsulated fillings consisting of at least a filling and a chocolate or chocolate-like coating, wherein the filling comprises conventional filling ingredients, such as sugar, skimmed milk powder, salt or emulsifier and at least 25 wt.% of a filling fat, are well-known products. So far, however, these products have displayed a big disadvantage, in particular when the filling is liquid, i.e. fat present in the liquid filling migrates into the coating layer. Because of this migration, blooming of the chocolate occurs.

In order to overcome this problem, a solution was sought in the use of an intermediate layer between the liquid filling and the coating. However, such an extra layer complicates the production process and often has a negative influence on the mouthfeel of the product.

We have found that it is possible to avoid the necessity of such an extra layer, while the product properties are as good or even better by applying the fat compositions according to the invention. Application of these fat composition leads to a high-quality product performance and enables also the use of different types of fats A in our products.

From US 2,979,401 stabilizing ingredients for solid chocolate materials or chocolate-coated products are known that are included in the chocolate in amounts of 0.5-5 wt.%. The stabilizing ingredients consist of triglycerides of lauric, myristic and palmitic acid, preferably in molar ratios of 2.0 : 1.2 : 2.0. Minor amounts of other fatty acids do not change the basic character of the ingredients. The ingredients are used to stabilize the colour of chocolate upon storage. Because of the very strict requirements set to the fatty acid components of the triglycerides that may be used, these products have never been applied commercially.

From US 3,491,677 it is further known that bloom formation can be inhibited by utilization of fatty compositions that are mixtures of natural interesterified triglycerides comprising short-chain fatty acids and long-chain fatty acids while the iodine value (= I.V.) of the compounds is 30-55 and the melting point is low. As a consequence of the above-mentioned requirements, only a limited range of triglycerides could be applied while the low melting point may create problems as regards the properties of the chocolate composition.

From EP 390,408 triglyceride compositions are known that contain high levels (at least 85%) of combined MLM and MML (M = saturated fatty acid C₈-C₁₀; L = saturated fatty acid C₂₀-C₂₄) and low levels (i.e. at most 10 wt.%) of triglycerides LLM and LML (combined). These fats should always contain C₈ and C₁₀ fatty acid residues (35-60 wt.%) in a ratio of 1:4 to 4:1, while also 35-60 wt.% of behenic acid should be present. Minor amounts of C₁₂-C₁₈ fatty acids can be present in the fats. Moreover the compositions contain up to 15 wt% of milk fat.

The fat phase comprising the above-mentioned triglycerides should contain less than 20 wt.% of cocoa butter (i.e. less than 15 wt.% of SUS; S = saturated C₁₆/C₁₈; U = oleic). The triglycerides are applied in order to reduce the caloric value of compositions normally containing cocoa butter by replacing cocoa butter by these mixed triglycerides.

We have now found that the problems associated with the application of the prior art products can be solved by using our fats as part of the filling fats in fully or partially encapsulated fillings.

The N-line (NMR-pulse) of the total fat composition (so consisting of the blend of fats A, B and/or C) in this instance is preferably (not stabilized): N₂₀ = 10-75 more preferably 20-45, and N₃₀ = 0-20, more preferably < 18.

Although the fat compositions preferably are applied as part of the filling of an encapsulated filling, it is also possible that the fat compositions are applied as part of the fat phase of the encapsulation.

### EXAMPLES

A conventional dark chocolate was used as the basic composition. To three of these basic compositions in total 5 wt% of the following fats were added:
(a) 1.75% hardstock and 3.25 wt% cocoa butter
(b) 1.75% hardstock; 1% palm kernel olein, and 2.25% cocoa butter
(c) 1.75% hardstock; 2% palm kernel olein and 1.25% cocoa butter

The hardstock (= fat A) was an (H₂M + M₂H) fat with the following composition:
C₁₂= 26.5% C₁₄=9% C₁₆= 21% C_{18:0}= 38%
C₃₀-C₃₈= 8.1
C₄₀-C₄₆= 61.4 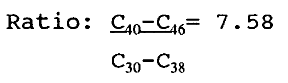
The palm kernel olein had an (U₃ + U₂S) content of 15.5 wt%. It further contained 88.9 wt% of saturated and unsaturated fatty acids with a melting point of less than 60°C. Its N₂₀ (unstabilised) was 8.

The compositions were slab-tempered and bars were moulded. The bars were stored at 13, 20 and 25°C and monitored for bloom and gloss.

Results are shown in table 1

**Table 1**

| | at 13°C | | | at 20°C | | | at 25°C | | |
|---|---|---|---|---|---|---|---|---|---|
| | A | B | C | A | B | C | A | B | C |
| fresh | 4 | 4 | 3 | 4 | 4 | 3 | 4 | 4 | 3 |
| 1 week | 4 | 4 | 3 | 4 | 4 | 3 | 4 | 4 | 3 |
| 1 month | 4 | 4 | 3 | 4 | 4 | 3 | 4 | 4 | 3 |
| 2 months | 4 | 4 | 3 | 4 | 4 | 3 | 4 | 4 | 3 |
| 3½ months | 3/4 | 3/4 | 3 | 1c | 4 | 3 | 4 | 4 | 3 |
| 6 months | 3/4 | 3/4 | 3 | 2/3C | 3/4 | 3 | 4 | 4 | 3 |
| 9 months | 3/4 | 3/4 | 3 | 2C | 3B/C | 3B | 4 | 4 | 3 |
| 10 months | 3/4 | 3/4 | 3 | 2C | 3B/C | 3B | 4 | 4 | 3 |
| Gloss scores: 1= very poor 5= very good Bloom scores: B= beginning of bloom C= bloom | | | | | | | | | |

It can be concluded that at 20°C the presence of palm kernel olein led to an improvement (compare: ≧ 3½ months results).

## Claims

1. Blend of triglyceride compositions A, B and C comprising :
2-95 wt.%, preferably 5-80 wt.% of A;
0.5-94.5 wt.%, preferably 10-80 wt.% of B;
0-97.5 wt.%, preferably 5-70 wt.% of C,
wherein
A is a triglyceride composition of the (H₂M + M₂H)-type, H being saturated fatty acid having at least 16 C-atoms, M being saturated fatty acid having 8-14, preferably 12-14 C-atoms, preferably with a weight ratio of components having 40-46 C-atoms : components having 30-38 C-atoms 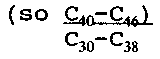 of 1-20, preferably 2-10;
B is a vegetable or synthetic triglyceride composition having a content of (U₃ + U₂S)-triglycerides of less than 30 wt.%, and having more than 40 wt% saturated and/or unsaturated fatty acid residues with a melting point for the free acid of less than 60°C, preferably less than 55°C, while the N₂₀ (not stab.) of component B is less than 40, preferably less than 30, more preferably less than 20
C is a triglyceride composition having a SUS content of at least 30 wt.%, preferably at least 45 wt.%, and/or displaying an N₂₀ (not stab.) > 15 wherein
U = cis- or trans-, mono- or polyunsaturated fatty acid having at least 18 C-atoms, in particular oleic acid, and
S = saturated fatty acid having 16-22 C-atoms, in particular 16-18 C-atoms.

2. Blend of triglycerides according to Claim 1, wherein A is an (H₂M + M₂H)-type composition as obtainable from the interesterification of a vegetable oil high in triglycerides with fatty acid residues having at least 16 C-atoms and a triglyceride rich in lauric and/or myristic acid residues.

3. Blend according to Claim 2, wherein A is derived from hardened palm oil and hardened palm kernel oil.

4. Blend according to Claim 1, wherein B is selected from the group consisting of: 1) palm kernel olein, 2) MCT oils, 3) coconut oil, 4) coconut olein, 5) blends of 1-4, 6) blends of 1-4 with other liquid oils or fats.

5. Blend according to Claim 4, wherein B is an olein fraction from the fractionation of palm kernel fat.

6. Blend according to Claim 1, wherein C is selected from the group consisting of cocoa butter, shea stearin, palm oil mid-fraction, illipe and fractions of cocoa butter or mixtures thereof.

7. Blend according to Claim 6, wherein C has a content of trisaturated triglycerides of less than 5 wt.%, preferably less than 3 wt.%.

8. Chocolate composition comprising a fat component and the conventional chocolate ingredients, wherein the fat component comprises 1-25 wt.% of the blend according to Claims 1-7.

9. Chocolate composition according to Claim 8, wherein the chocolate is a dark chocolate.

10. Chocolate bars or chocolate-coated confectionery products, wherein the chocolate composition comprises an amount of the blend according to Claims 1-7.

11. Chocolate-like composition low in cocoa butter comprising a fat component and the conventional ingredients, wherein the fat component comprises 5-100 wt.% of the blend according to Claims 1-7.

12. Bars or coated confectionery products, wherein the composition comprises an amount of the composition of claim 11.

13. Fat composition according to Claim 1, wherein fat C has an N₂₀ > 15 and is a hardened fat or a fraction thereof with a melting point of 25-55°C, such as hardened palm oil olein-37, hardened palm oil-44, hardened soybean-36, a mid-fraction of a hardened mixture of soybean oil and cottonseed oil.

14. Baked bakery products, at least partly coated with a chocolate or chocolate-like material, wherein the fat phase of the dough from which the baked product is made at least partly consists of the fat composition according to Claims 1-7 or 13.

15. Baked products according to Claim 14, wherein the (H₂M + M₂H) level of the fat phase of the dough phase of the baked product is 10-40 wt.%.

16. Baked products according to Claim 15, wherein the baked product is a biscuit, a cookie or a cake, which is at least partly coated with a chocolate or chocolate-like layer.

17. Confectionery product comprising a chocolate or chocolate-like outer coating completely or partially covering a filling comprising a fat composition according to claims 1-7.
